# EUROPEAN PATENT SPECIFICATION

(11) **EP 0 697 423 B1**
(45) Date of publication and mention of the grant of the patent: **20.01.1999**
(21) Application number: 95305511.8
(22) Date of filing: 08.08.1995
(51) Int. Cl.: C08F 220/18, C09D 133/10

(54) **Aqueous polymer dispersions for coating wood**
Wässrige Polymerdispersionen für die Beschichtigung von Holz
Dispersions aqueuses de polymères pour le revêtement de bois

(30) Priority: 18.08.1994 GB 9416709
(43) Date of publication of application: 21.02.1996
(73) Proprietor: ALLIED COLLOIDS LIMITED, Bradford, West Yorkshire BD12 0JZ (GB)
(72) Inventor: Stockwell, John R., Skipton, North Yorkshire, BD23 6SD (GB); Plonka, John Mark, Leeds, West Yorkshire, LS19 6JB (GB)
(74) Representative: Lawrence, Peter Robin Broughton

(56) References cited:
- EP-A- 0 279 067
- GB-A- 909 896

## Description

This invention relates to aqueous polymer dispersions that can be applied as lacquers to wood to provide a transparent protective finish.

U.S. 5,070,136 describes aqueous copolymer dispersions wherein the copolymer is formed from 85 to 98.5% by weight of methacrylates, 0.5 to 4% by weight of (meth) acrylic acid, 0.5 to 4% by weight (meth) acrylamide, 0.5 to 4% by weight of an α,β-ethylenically or polyunsaturated compound and 0 to 3% by weight of a carbonyl-containing α,β-ethylenically unsaturated compound. It is stated that the methacrylates are preferably of C₁₋₁₂ monoalcohols. It is stated that n-butyl methacrylate or a mixture of this with up to 25% by weight methyl methacrylate is preferred. Such a mixture is used in three of the four examples in U.S. 5,070,136. We find that if n-butyl methacrylate is used alone (i.e. without the methyl methacrylate), the cured finish can tend to be rather soft.

0.5 to 1 mole (per mole of carbonyl-containing monomer) of a dihydrazide of an aliphatic dicarboxylic acid can be added to the dispersion as an additional cross-linking agent.

Coating compositions are described in GB-A-909,896 which contain styrene monomer and acrylate monomer (which may be alkyl acrylate or alkyl methacrylate) in a ratio of styrene to acrylate from 60:40 to 40:60 parts by weight.

A composition suitable for coating wood is provided by formulating the copolymer dispersion with a variety of components, including volatile coalescents. It is necessary to include volatile coalescents in such compositions because the copolymer has a film forming temperature (i.e., MFFT, minimum film-forming temperature) which is sufficiently high that, in the absence of coalescents, a clear film would not easily be obtained. However the necessity to include volatile coalescents is undesirable, especially since some of the materials that are frequently use as coalescents (such as ethyleneglycol butyl ethers) are materials that some regulatory authorities believe should be omitted.

It would therefore be desirable to be able to formulate a copolymer that can be used in a wood finish but which can have a low film forming temperature and which can thus permit the use of a low amount of coalescing agent or the omission of coalescing agent.

In the invention, we provide an aqueous polymer dispersion in which the copolymer is formed from
70 to 30% by weight C₁₋₃ alkyl methacrylate;
50 to 30% by weight C₄₋₁₂ alkyl methacrylate;
the total amount of alkyl methacrylate being 70 to 90% by weight;
5 to 20% by weight styrene or alkyl styrene;
2 to 10% by weight water soluble ethylenically unsaturated monomer;
0.5 to 4% by weight polyethylenically unsaturated monomer; and
70 to 4% by weight carbonyl-containing ethylenically unsaturated monomer.

Other non-interfering monomers may be included in non-interfering amounts but are usually omitted so that the polymer generally consists essentially of the defined monomers.

The alkyl methacrylate is preferably provided entirely by butyl methacrylate or other C₄₋₁₂ alkyl methacrylate. However the methacrylate may be a blend of C₁₋₃ alkyl methacrylate with a C₄₋₁₂ alkyl methacrylate. For instance a blend of 5 to 15% methyl methacrylate and 70 to 90% butyl methacrylate may be used. Alternatively a blend of 75 to 90% by weight of butyl methacrylate and 0 to 10% by weight methyl methacrylate may be used. The alkyl can be linear, branched or cyclic. The amount of C₁₋₃ alkyl methacrylate is preferably below 10%, often below 5%. The amount of the C₄₋₁₂ alkyl methacrylate is usually above 70%, often 75 or 80% to 90%. Instead of n-butyl methacrylate, other higher alkyl methacrylates that can be used include secondary or tertiary butyl methacrylate, cyclohexyl methacrylate, 2-ethylhexyl methacrylate and lauryl methacrylate.

The monomers also include 5 to 20% by weight styrene or alkyl styrene, such as methyl or ethyl styrene. The amount of the styrene is usually at least 7 % but is generally not more than about 15 or 17%. Values of around 10 to 15% by weight are generally best.

It is known that homopolymers of styrene and of methyl methacrylate have similar glass transition temperatures and that the glass transition temperature of a copolymer of monomers including styrene would be expected to be similar to the glass transition temperature of a copolymer of a blend of monomers which is the same except that styrene is replaced by the same amount of methyl methacrylate. There is usually some correlation between the film-forming temperature of a polymer dispersion and the glass transition temperature of the polymer in it and so it would be expected that styrene and methyl methacrylate could be used interchangeably as comonomers with, for instance, butyl methacrylate without significantly altering the film-forming temperature of the dispersion. However we have surprisingly found that the incorporation of styrene in low amounts, usually not more than 15 to 20% by weight maximum, provides a polymer dispersion having a surprisingly low film-forming temperature and yet has good hardness and other physical properties.

In particular, modification of the preferred copolymers shown in U.S. 5,070,136 (formed from a blend of butyl methacrylate and methyl methacrylate) by replacing some or all of the methyl methacrylate by styrene or alkyl styrene results in reduction of the film-forming temperature while retaining the hardness and other desirable physical properties of the polymer and coatings obtained from it. As a result it is possible to reduce the amount of coalescent in the composition without increasing the film-forming temperature and/or it is possible to formulate the composition so that it forms a film at a lower temperature.

The water soluble ethylenically unsaturated monomer that is used can be selected from a variety of soluble ethylenically unsaturated monomers such as ethylenically unsaturated carboxylic acids and (meth) acrylamide. Preferably the monomers are a blend of (meth) acrylic acid and (meth) acrylamide. Thus for instance there is preferably 0.5 to 5% (often 0.5 to 2%) of methacrylic acid or, preferably, acrylic acid or a blend thereof, and 0.5 to 5% (often 0.5 to 2%) of acrylamide. For the best solvent resistance performance in the final coating it is preferred to include 2 to 4%, often around 3%, carboxylic acid, preferably acrylic acid.

The polyethylenically unsaturated compounds are typically diethylenically or triethylenically unsaturated compounds. The compounds should be soluble in the monomer blend. Suitable monomers include divinyl aromatics such as divinyl benzene, diacrylates and dimethacrylates of C₂₋₂₄ diols such as butane diol and hexane diol, divinyl ethylene urea and other divinyl ureas, and diallyl and triallyl compounds such as diallyl phthalate and triallyl isocyanurate. The amount of the polyethylenically unsaturated compound is preferably 0.5 to 2.5%. The inclusion of such materials causes cross-linking between the polymer backbones.

The polymer preferably additionally includes 0.5 to 4%, often 0.5 to 3%, of a carbonyl-containing unsaturated monomer. Examples include acrolein, methacrolein, diacetone acrylamide, diacetone methacrylamide, 2-butanone methacrylate and vinyl acetoacetate.

When, as is preferred, such a compound is included (typically in an amount of 1 to 3% by weight) it is preferred to include in the dispersion a dihydrazide which will react with the carbonyl compound to provide additional cross linking. The amount of dihydrazide is generally 0.5 to 1 mole per mole of carbonyl-containing monomer. The dihydrazide is preferably a dihydrazide of an aliphatic dicarboxylic acid, preferably a C₄₋₁₆ dicarboxylic acid. Examples of suitable dihydrazides are adipodihydrazide, glutarodihydrazide and succinodihydrazide.

The polymer dispersion can be made by conventional oil-in-water emulsion polymerisation, typically to a solids content of 20 to 60% by weight, often at least 40%, e.g., 40 to 50%, by weight. The polymerisation can be conducted using conventional optional additives such as emulsifiers, protective colloids and chain transfer agents. Generally the dihydrazide is added after the polymerisation.

A coating composition can be formulated by blending with the polymer dispersion conventional film-forming additives and, generally, the dihydrazide (unless that has previously been incorporated). The conventional film-forming additives generally include film-forming coalescents which are preferably volatile. Preferred coalescents are alkyl esters of polycarboxylic acids, usually dimethyl or diisobutyl or other dialkyl (usually C₁₋₈ esters) of dicarboxylic aliphatic acids such as adipic acid and/or glutaric acid and/or succinic acid. Other coalescents which can be used include the alkyl ether and the alkyl ether acetate of propylene glycol or polypropylene glycol, the alkyl group preferably being C₁₋₈ alkyl, usually n-butyl. The compositions are preferably free of alkyl ethers and alkyl ether acetates of ethylene glycol and polyethylene glycol (for instance diethylene glycol monoethyl ether) since such materials are unnecessary in view of the preferred film-forming properties obtainable in the invention. The total amount of coalescent used in the invention, based on the coating composition, is generally in the range 1 to 5%, and an advantage of the invention is that good results can be obtained with lower amounts than would otherwise be needed and so typically the amount is not more than 4% and preferably not more than 3% by weight based on the coating composition.

Other conventional additives that can be included in the dispersions include waxes, flattening agents such as silica compounds, dyes, and thickeners. The composition is preferably formulated so that it has high light transmission properties (often above 90%) and gives a substantially clear coating.

The coating composition can, depending upon its manner of formulation, be applied by brushing on to the substrate that is to be coated. This substrate is usually wood. The coated substrate may be dried at room temperature or may be subjected to elevated temperatures (for instance up to 80°C) in conventional tunnel or other driers. This accelerates the final cross linking and curing of the coating.

The cured coatings are abrasion resistant and so are readily sandable and have good stacking properties and good chemical resistance.

The following are some examples.

### Example 1

A copolymer dispersion is formed of the following blend of monomers

| | |
|---|---|
| N-Butyl Methacrylate | 78.9 % wt |
| Styrene | 12.6 % wt |
| Methacrylic Acid | 1.4 % wt |
| Acrylic Acid | 1.4 % wt |
| Diacetone Acrylamide | 1.9 % wt |
| 1,4-Butane Diol Diacrylate | 1.9 % wt |
| Acrylamide | 1.9 % wt |

1kg of the copolymer dispersion was formed by providing 437 grams of the monomer blend, in the proportions stated above, and emulsifying this blend in 213 grams water in the presence of 17 grams of a 27% aqueous solution of the sodium salt of sulphated 3 mole ethoxylated C₁₂₋₁₄ fatty alcohol.

226 grams of water and 17 grams of the same emulsifier solution was warmed in a vessel to 80 to 90°C and sparged with nitrogen and then adjusted to about 85°C. 3.65 grams of a solution of 2 grams ammonium persulphate in 73 grams water was added to the aqueous solution in the vessel followed by 34 grams of the monomer emulsion. The temperature was allowed to rise by exothermic polymerisation to 88°C and then cooled to 85°C and held at this temperature for 15 minutes. The remainder of the monomer emulsion was added over 2.5 hours and the remainder of the initiator solution was added over 3 hours, while maintaining the temperature at about 85°C. When all the additions were complete, the resultant polymer emulsion was maintained at 85°C for a further 1 hour. The dispersion was cooled below 40°C and 11 grams adipic dihydrazide was added and stirred until fully dissolved.

The product had the following properties:

| | |
|---|---|
| % Solids | 44.0 |
| pH | 3.9 |
| viscosity (Brookfield RVT) | 0.1Pa.s (100 cps) |
| MFFT | 38°C |

### Example 2

The procedure of Example 1 was repeated except that the styrene was replaced with methyl methacrylate.

The product had the following properties:

| | |
|---|---|
| % Solids | 44.0 |
| pH | 3.9 |
| viscosity | 0.05Pa.s (50 cps) |
| MFFT | 48°C |

The effect of different coalescents on the minimum film-forming temperature (MFFT) of the products from Examples 1 and 2 was determined.

In particular, coating compositions of each dispersion were formed by blending 79.55 parts by weight of the dispersion with 0.2 parts by weight of a conventional substrate wetting agent and the balance, to 100 parts by weight, being a blend of water and variable amounts of different coalescents. The resultant coating compositions had a solids content of 35% by weight. Three coalescents were tested as follows:
A - a mixture of refined dimethyl esters of adipic, glutaric and succinic acids
B - propylene glycol n-butyl ether
C - propylene glycol n-butyl ether acetate

The minimum film-forming temperature of the resultant coating compositions formulated with differing amounts of the coalescent was determined and the results are shown in the following tables.

| % w/w A | M.F.F.T. (°C) | |
|---|---|---|
| | Resin 1 (STY) | Resin 2 (MMA) |
| 0 | 38.0 | 48.0 |
| 1 | 22.5 | 29.5 |
| 2 | 12.0 | 19.0 |
| 3 | 4.55 | 11.50 |
| 4 | 0 | 5.50 |
| 5 | - 1.10 | 0.50 |
| 6 | | 0 |

| % w/w B | M.F.F.T. (°C) | |
|---|---|---|
| | Resin 1 (STY) | Resin 2 (MMA) |
| 0 | 38.0 | 48.0 |
| 1 | 32.8 | 39.0 |
| 2 | 25.0 | 31.0 |
| 3 | 19.0 | 24.0 |
| 4 | 13.0 | 18.5 |
| 5 | 7.5 | 13.0 |
| 6 | 2.5 | 8.0 |
| 7 | - 0.5 | 4.0 |
| 8 | | 0.50 |

| % w/w C | M.F.F.T. (°C) | |
|---|---|---|
| | Resin 1 (STY) | Resin 2 (MMA) |
| 0 | 38.0 | 48.0 |
| 1 | 31.0 | 39.0 |
| 2 | 24.0 | 30.0 |
| 3 | 18.0 | 22.5 |
| 4 | 12.0 | 15.5 |
| 5 | 6.0 | 9.0 |
| 6 | - 0.5 | 4.0 |
| 7 | - 1.5 | 0.5 |

It is apparent that the compositions of the invention, based on copolymers of butyl methacrylate and styrene, have lower film-forming temperatures than the corresponding compositions formed using methyl methacrylate in place of the styrene. In all instances, the coating compositions dried on wood to form a clear, abrasion-resistant and chemical-resistant protective lacquer coating.

### Example 3

Similar results to those of Example 1 may be achieved using a blend of monomers as follows:

| | |
|---|---|
| N-Butyl Methacrylate | 80.5 % wt |
| Styrene | 12.8 % wt |
| Methacrylic Acid | 1.4 % wt |
| Diacetone Diol Diacrylate | 1.9 % wt |
| Butane Diol Diacrylate | 1.9 % wt |
| Acrylamide | 1.4 % wt |

## Claims

1. An aqueous polymer dispersion in which the copolymer is formed from
0 to 30% by weight C₁₋₃ alkyl methacrylate;
50 to 90% by weight C₄₋₁₂ alkyl methacrylate;
the total amount of alkyl methacrylate being 70 to 90% by weight;
5 to 20% by weight styrene or alkyl styrene;
2 to 10% by weight water soluble ethylenically unsaturated monomer;
0.5 to 4% by weight polyethylenically unsaturated monomer; and
0 to 4% by weight carbonyl containing ethylenically unsaturated monomer.

2. A dispersion according to claim 1 in which the alkyl methacrylate is provided by 75 to 90% by weight of a butyl methacrylate and 0 to 10% by weight methyl methacrylate and the amount of styrene is 7 to 17% by weight.

3. A dispersion according to claim 1 in which the water soluble ethylenically unsaturated monomer is provided by 0.5 to 5% of (meth) acrylic acid and 0.5 to 5% of (meth) acrylamide.

4. A dispersion according to any preceding claim in which the carbonyl-containing monomer is present in an amount of 0.5 to 4% and the dispersion additionally includes dihydrazide of dicarboxylic acid for cross linking with the carbonyl monomer.

5. A dispersion according to any preceding claim in which the alkyl methacrylate is provided only by C₄₋₁₂ alkyl methacrylate and the amount of styrene is 10 to 15% by weight.

6. A dispersion according to any preceding claim suitable for coating on wood and additionally including coalescent.

7. A dispersion according to claim 6 in which the coalescent is selected from dialkyl esters of dicarboyxlic acid, alkyl ether of propylene glycol, and alkyl ether acetate of propylene glycol.

## Patentansprüche

1. Wäßrige Polymerdispersion, in der das Copolymer aus
0 bis 30 Gew.-% C₁₋₃-Alkylmethacrylat,
50 bis 90 Gew.-% C₄₋₁₂-Alkylmethacrylat,
wobei die Gesamtmenge an Alkylmethacrylat 70 bis 90 Gew.-% beträgt,
5 bis 20 Gew.-% Styrol oder Alkylstyrol,
2 bis 10 Gew.-% wasserlöslichem ethylenisch ungesättigtem Monomer,
0,5 bis 4 Gew.-% polyethylenisch ungesättigtem Monomer und
0 bis 4 Gew.-% Carbonyl-haltigem ethylenisch ungesättigtem Monomer gebildet ist.

2. Dispersion nach Anspruch 1, worin das Alkylmethacrylat durch 75 bis 90 Gew.-% eines Butylmethacrylats und 0 bis 10 Gew.-% Methylmethacrylat bereitgestellt wird und die Menge an Styrol 7 bis 17 Gew.-% beträgt.

3. Dispersion nach Anspruch 1, worin das wasserlösliche ethylenisch ungesättigte Monomer durch 0,5 bis 5% (Meth)acrylsäure und 0,5 bis 5% (Meth)acrylamid bereitgestellt wird.

4. Dispersion nach einem der vorhergehenden Ansprüche, worin das Carbonyl-haltige Monomer in einer Menge von 0,5 bis 4% vorliegt und die Dispersion zusätzlich ein Dihydrazid einer Dicarbonsäure zur Vernetzung mit dem Carbonyl-Monomer enthält.

5. Dispersion nach einem der vorhergehenden Ansprüche, worin das Alkylmethacrylat nur durch ein C₄₋₁₂-Alkylmethacrylat bereitgestellt wird und die Menge an Styrol 10 bis 15 Gew.-% beträgt.

6. Dispersion nach einem der vorhergehenden Ansprüche, die sich zum Aufbringen auf Holz eignet und zusätzlich ein Koaleszenzmittel enthält.

7. Dispersion nach Anspruch 6, worin das Koaleszenzmittel unter Dialkylestern von Dicarbonsäuren, Alkylethern von Propylenglycol und Alkyletheracetaten von Propylenglycol ausgewählt ist.

## Revendications

1. Dispersion polymère aqueuse dans laquelle le copolymère est constitué
de 0 à 30 % en poids de méthacrylate d'alkyle en C₁-C₃ ;
de 50 à 90 % en poids de méthacrylate d'alkyle en C₄-C₁₂ ;
la quantité totale de méthacrylate d'alkyle étant de 70 à 90 % en poids ;
de 5 à 20 % en poids de styrène ou d'alkylstyrène ;
de 2 à 10 % en poids de monomère éthyléniquement insaturé soluble dans l'eau ;
de 0,5 à 4 % en poids de monomère polyéthyléniquement insaturé ; et
de 0 à 4 % en poids de monomère éthyléniquement insaturé contenant un groupe carbonyle.

2. Dispersion selon la revendication 1, dans laquelle le méthacrylate d'alkyle est fourni par de 75 à 90 % en poids par du méthacrylate de butyle et de 0 à 10 % en poids par du méthacrylate de méthyle et la quantité de styrène est de 7 à 17 % en poids.

3. Dispersion selon la revendication 1, dans laquelle le monomère éthyléniquement insaturé soluble dans l'eau est fourni par de 0,5 à 5 % d'acide (méth)acrylique et de 0,5 à 5 % de (méth)acrylamide.

4. Dispersion selon l'une quelconque des revendications précédentes, dans laquelle le monomère contenant un groupe carbonyle est présent dans une quantité de 0,5 à 4 % et la dispersion comprend de plus un dihydrazide d'acide dicarboxylique pour la réticulation avec le monomère de carbonyle.

5. Dispersion selon l'une quelconque des revendications précédentes, dans laquelle le méthacrylate d'alkyle est fourni uniquement par du méthacrylate d'alkyle en C₄-C₁₂ et la quantité de styrène est de 10 à 15 % en poids.

6. Dispersion selon l'une quelconque des revendications précédentes appropriée pour un revêtement sur du bois et comprenant de plus un agent coalescent.

7. Dispersion selon la revendication 6, dans laquelle l'agent coalescent est choisi parmi des esters dialkyliques d'acides dicarboxyliques, un akyléther de propylèneglycol et un acétate d'alkyléther de propylèneglycol.
